# EUROPEAN PATENT APPLICATION

(11) **EP 4 286 114 A1**
(43) Date of publication of application: **06.12.2023**
(21) Application number: 21931752.6
(22) Date of filing: 20.12.2021
(51) Int. Cl.: B25J 19/06

(54) **CONTROL DEVICE, CONTROL SYSTEM, CONTROL METHOD, AND PROGRAM**

(30) Priority: 15.03.2021 JP 2021041149
(71) Applicant: OMRON Corporation, Kyoto 600-8530 (JP)
(72) Inventor: NING, Xiaoguang, Kyoto-shi, Kyoto 600-8530 (JP)
(74) Representative: Isarpatent
(86) International application number: PCT/JP2021/047113
(87) International publication number: WO 2022/196010

(57) **Abstract**

A control unit controls a movement of a robot on the basis of movement trajectory information. A detection unit detects a position of the robot and a position of a person. A judgment unit judges whether a first distance between the position of the robot and the position of the person is shorter than a first predetermined distance. A prediction unit predicts a future position of the robot on the basis of the position of the robot and predicts a future position of the person on the basis of the position of the person. In a case in which a second distance between the future position of the robot and the future position of the person is shorter than a second predetermined distance, a modification unit modifies the movement trajectory information such that the second distance is equal to or longer than the second predetermined distance. In a case in which the first distance is shorter than the first predetermined distance, the control unit stops or decelerates the movement of the robot, regardless of whether the movement trajectory information is modified. In a case in which the first distance is equal to or longer than the first predetermined distance and the movement trajectory information is modified, the control unit controls the movement of the robot on the basis of the movement trajectory information after modification.

## Description

### TECHNICAL FIELD

The present invention relates to a control system, a control device, a control method, and a program.

### BACKGROUND ART

When a robot, such as an industrial robot or a cooperative robot, and a person coexist or work together, safety sensors or other devices are sometimes used to ensure a safe distance between the robot and the person, and a speed limit is sometimes imposed on the robot. In either case, to meet requirements for safety certification, movement of the robot is restricted when a person approaches the robot. This reduces operational availability and productivity of the system. Patent Document 1 discloses stopping the movement of the robot when it is determined that a position of the person is within a predetermined radius. Patent Document 2 discloses judging whether there is a possibility that the robot will come into contact with a human in the future and, if there is such a possibility, modifying a trajectory of the robot.

### CITATION LIST

### PATENT LITERATURE

Patent Literature 1: Japanese Laid-open Patent Publication No. 2014-8562
Patent Literature 2: Japanese Laid-open Patent Publication No. 2020-46779

### SUMMARY OF INVENTION

### TECHNICAL PROBLEM

In the related art, the movement of the robot is stopped in a case in which the positions of the person and the robot are close to each other. However, when the movement of the robot is frequently stopped, operation efficiency of the robot may decrease. Further, in the related art, the trajectory of the robot is modified if there is a possibility that the robot will come into contact with a person in the future. However, in this case, safety after modification of the trajectory of the robot is not ensured. Further, in the case of control based on machine learning only, it is difficult to meet safety standards.

The present invention has been made in view of the circumstances described above, and an object thereof is to provide a technique in which both safety and robot operation efficiency can be achieved in a compatible manner.

### SOLUTION TO PROBLEM

A control device according to an aspect of the present invention includes a control unit configured to control a movement of a robot on the basis of movement trajectory information indicating a movement trajectory of the robot, a judgment unit configured to judge whether a first distance between a position of the robot and a position of a person is shorter than a first predetermined distance, the positions being detected by a detection unit, a prediction unit configured to predict a future position of the robot on the basis of the position of the robot and predict a future position of the person on the basis of the position of the person, and a modification unit configured to judge whether a second distance between the future position of the robot and the future position of the person is shorter than a second predetermined distance and, in a case in which the second distance is shorter than the second predetermined distance, modify the movement trajectory information such that the second distance is equal to or longer than the second predetermined distance. The control unit, in a case in which the first distance is shorter than the first predetermined distance, stops or decelerates the movement of the robot, regardless of whether the movement trajectory information is modified or, in a case in which the first distance is equal to or longer than the first predetermined distance and the movement trajectory information is modified, controls the movement of the robot on the basis of the movement trajectory information after modification.

In a case in which the first distance is shorter than the first predetermined distance, the control unit stops or decelerates the movement of the robot, regardless of whether the movement trajectory information is modified. Accordingly, the control unit gives priority to stopping or decelerating the movement of the robot over controlling the movement of the robot on the basis of the movement trajectory information after modification. By stopping or decelerating the movement of the robot in a case in which the first distance is shorter than the first predetermined distance, collision or contact between the robot and the person can be avoided. In a case in which the first distance is equal to or longer than the first predetermined distance and the movement trajectory information is modified, the control unit controls the movement of the robot on the basis of the movement trajectory information after modification. By controlling the movement of the robot on the basis of the movement trajectory information after modification, collision or contact between the robot and the person in the future can be avoided and the stopping or deceleration of the movement of the robot in the future can be suppressed. According to the control device described above, by stopping or decelerating the movement of the robot on the basis of a positional relationship between the position of the robot and the position of the person and concurrently controlling the movement of the robot on the basis of the movement trajectory information after modification, an operation efficiency of the robot can be improved while ensuring safety. Accordingly, both safety and operation efficiency of the robot can be achieved in a compatible manner.

In the control device according to the aspect described above, the detection unit detects the position of the robot and the position of the person at regular or irregular intervals, the judgment unit judges whether the first distance is shorter than the first predetermined distance each time the position of the robot and the position of the person are detected, and the prediction unit predicts the future position of the robot and the future position of the person each time the position of the robot and the position of the person are detected. Since the detection unit detects the position of the robot and the position of the person at regular or irregular intervals, the judgment unit can judge whether the first distance is shorter than the first predetermined distance over time and the prediction unit can predict the future position of the robot and the future position of the person over time. Accordingly, it is possible to avoid a collision or contact between the robot and the person and avoid a collision or contact between the robot and the person in the future, in accordance with a temporal change in the position of the robot and a temporal change in the position of the person.

In the control device according to the aspect described above, the judgment unit, in a case in which the first distance is equal to or longer than the first predetermined distance, transmits a first signal to the control unit, and, in a case in which the control unit receives the first signal after stopping the movement of the robot and the movement trajectory information is modified after the control unit receives the first signal, the control unit resumes the movement of the robot and controls the movement of the robot on the basis of the movement trajectory information modified after receipt of the first signal or, in a case in which the control unit receives the first signal after decelerating the movement of the robot and the movement trajectory information is modified after the control unit receives the first signal, the control unit returns a movement speed of the robot to a speed before the deceleration and controls the movement of the robot on the basis of the movement trajectory information modified after receipt of the first signal. After stopping or decelerating the movement of the robot and before receiving the first signal, the control unit does not control the movement of the robot on the basis of the movement trajectory information after modification, even if the movement trajectory information is modified. According to such control, by giving priority to stopping or decelerating the movement of the robot over the movement of the robot based on the movement trajectory information after modification, safety can be improved.

In the control device according to the aspect described above, the judgment unit, in a case in which the first distance is shorter than the first predetermined distance, transmits a second signal to the modification unit, and judges whether a third distance between the position of the robot and the position of the person detected after transmitting the second signal to the modification unit is shorter than the first predetermined distance, and, in a case in which the third distance is equal to or longer than the first predetermined distance, transmits a third signal to the modification unit. Further, the modification unit does not modify the movement trajectory information in a period from after receiving the second signal and until receiving the third signal. The modification unit does not modify the movement trajectory information in a period from after receiving the second signal and until receiving the third signal. Accordingly, even if the shortest distance between the future position of the robot and the future position of the person is shorter than the second predetermined distance during the period after the modification unit receives the second signal and before the modification unit receives the third signal, the modification unit does not modify the movement trajectory information. According to such control, by giving priority to stopping or decelerating the movement of the robot over the movement of the robot based on the movement trajectory information after modification, safety can be improved.

In the control device according to the aspect described above, the judgment unit, in a case in which the first distance is equal to or longer than the first predetermined distance, transmits a fourth signal to the control unit, and, in a case in which the control unit receives the fourth signal after stopping the movement of the robot and the movement trajectory information is not modified, the control unit resumes the movement of the robot and controls the movement of the robot on the basis of the movement trajectory information or, in a case in which the control unit receives the fourth signal after decreasing a movement speed of the robot and the movement trajectory information is not modified, the control unit returns the movement speed of the robot to an original speed and controls the movement of the robot on the basis of the movement trajectory information. Since the movement of the robot is resumed after collision or contact between the robot and the person is successfully avoided by stopping or decelerating the movement of the robot, operation efficiency of the robot can be improved while ensuring the safety of the control device.

In the control device according to the aspect described above, the prediction unit predicts the future position of the robot on the basis of a plurality of positions of the robot. In the control device according to the aspect described above, the prediction unit predicts the future position of the robot on the basis of the position of the robot and the movement trajectory information. In the control device according to the aspect described above, the prediction unit predicts the future position of the robot on the basis of a plurality of positions of the robot and the movement trajectory information. Thus, prediction accuracy of the future position of the robot is improved. In the control device according to the aspect described above, the prediction unit predicts the future position of the person on the basis of a plurality of positions of the person. Thus, the prediction accuracy of the future position of the person is improved. The prediction unit predicts the future position of the robot and the future position of the person by machine learning. Thus, the prediction accuracy of the future position of the robot and the future position of the person is improved.

The present invention can also be regarded as a control system configured to perform at least some of the processing described above, a control method including at least some of the processing described above, a program for realizing such a method, and a recording medium in which the program is recorded in a non-transitory manner. Note that the present invention can be configured by combining each of the above-described units and processes to the extent possible.

### ADVANTAGEOUS EFFECTS OF INVENTION

According to the present invention, it is possible to provide a technique in which both safety and robot operation efficiency can be achieved in a compatible manner.

### BRIEF DESCRIPTION OF DRAWINGS

[FIG. 1] FIG. 1 is a schematic configuration diagram of a control system according to the present embodiment.
[FIG. 2] FIG. 2 is a block configuration diagram of a control device according to the present embodiment.
[FIG. 3] FIG. 3 is a flowchart illustrating a processing flow of the control system according to the present embodiment.
[FIG. 4] FIG. 4 is a block configuration diagram of the control device according to the present embodiment.

### DESCRIPTION OF EMBODIMENTS

### <Application Example>

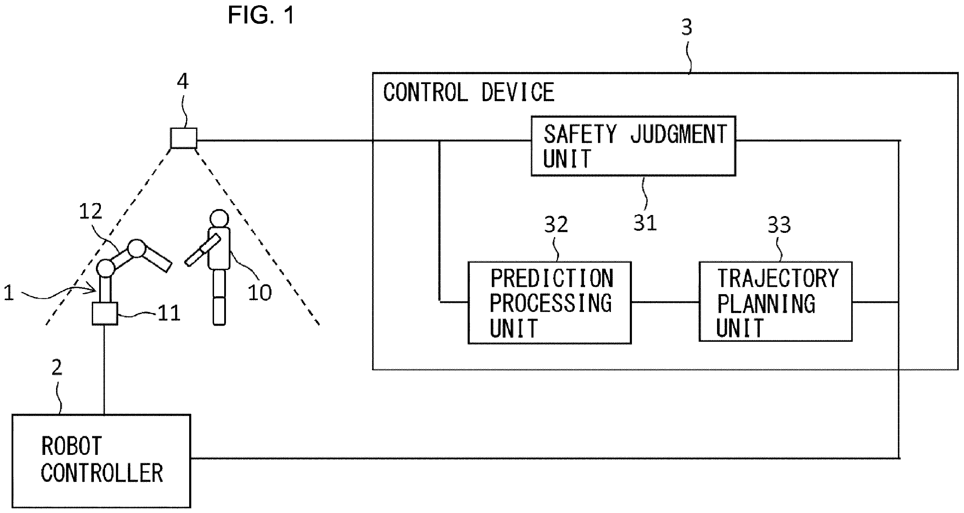

FIG. 1 is a schematic configuration diagram of a control system according to the present embodiment. In the control system of FIG. 1, in an environment in which a robot 1 and a person (worker) 10 coexist, for example, at a production site such as a factory, the robot 1 is controlled while movement of the person 10 is identified. The robot 1 in FIG. 1 is a vertical articulated robot and includes a base 11 and an arm 12 coupled to the base 11. The robot 1 is not limited to a vertical articulated robot and may be a robot that adopts another system, such as a horizontal articulated robot. An end effector (hand) that grips a target object is attached to a distal end of the arm 12. The robot 1 further includes a servo motor for moving the arm 12.

The control system includes the robot 1, a robot controller 2, a control device 3 that transmits an operation instruction signal and movement trajectory information to the robot controller 2, and a sensor 4 serving as a detection unit that detects a position of the robot 1 and a position of the person 10 at regular or irregular intervals. The robot controller 2 controls the movement of the robot 1 on the basis of the movement trajectory information. The robot controller 2 is an example of a control unit. The movement trajectory information is information indicating a movement trajectory of the robot 1 and includes information about the movement of the arm 12 of the robot 1, such as a start point, an end point, a path from the start point to the end point, and an intermediate point between the start point and the end point. Further, the robot controller 2 controls the start, stop, deceleration, and acceleration of the movement of the robot 1 in accordance with the operation instruction signal from the control device 3. The operation instruction signal includes a signal for an instruction to start and stop the movement of the robot 1 and a signal for an instruction to decrease or increase a movement speed of the robot 1.

The sensor 4 detects the position of the robot 1 and the position of the person 10 and transmits a detection result to the control device 3. The sensor 4 is a distance measurement sensor that measures a distance to a target object. As the sensor 4, radio detection and ranging (RADAR), light detection and ranging (LiDAR), or a three-dimensional camera may be used. Further, the sensor 4 may be a sensor system obtained by combining at least two of the RADAR, the LiDAR, and the three-dimensional camera. The position of the robot 1 may be a relative position in a detection range of the sensor 4. The position of the robot 1 may be a position of a part of the robot 1. For example, the position of the robot 1 may be a position of the distal end of the arm 12, a position of the end effector attached to the distal end of the arm 12, or a position of the base 11. The position of the person 10 may be a relative position in the detection range of the sensor 4. The position of the person 10 may be a position of a body part of the person 10. For example, the position of the person 10 may be a position of a hand, a position of a foot, or a position of a head of the person 10.

The control device 3 includes a safety judgment unit 31, a prediction processing unit 32, and a trajectory planning unit 33. The safety judgment unit 31 judges whether a distance (first distance) between the position of the robot 1 and the position of the person 10 is shorter than a first predetermined distance. In a case in which the distance between the position of the robot 1 and the position of the person 10 is equal to or longer than the first predetermined distance, the safety judgment unit 31 transmits an instruction signal for starting the movement of the robot 1 to the robot controller 2. Before movement of the robot 1 is started, such as immediately after activation of the power supply of the robot 1, the robot controller 2, upon receipt of the instruction signal for starting the movement of the robot 1, controls the movement of the robot 1 on the basis of the movement trajectory information. The safety judgment unit 31 or the trajectory planning unit 33 may transmit the movement trajectory information to the robot controller 2, and the robot controller 2 may store the received movement trajectory information in a storage unit of the robot controller 2. The movement trajectory information may be stored in advance in the storage unit of the robot controller 2. The first predetermined distance is a distance that can be set as desired, and may be the longest distance from a center position of the robot 1 in a movable region of the robot 1, or may be the longest distance from a center position of the robot 1 in a region larger than the movable region of the robot 1.

In a case in which the distance between the position of the robot 1 and the position of the person 10 is shorter than the first predetermined distance, the safety judgment unit 31 transmits, to the robot controller 2, an instruction signal for stopping the movement of the robot 1 (hereinafter referred to as a stop signal) or an instruction signal for decelerating the movement of the robot 1 (hereinafter referred to as a deceleration signal). In a case in which the robot controller 2 receives the stop signal after starting control of the movement of the robot 1 based on the movement trajectory information, the robot controller 2 stops the movement of the robot 1. In a case in which the robot controller 2 receives the deceleration signal after starting control of the movement of the robot 1 based on the movement trajectory information, the robot controller 2 decelerates the movement of the robot 1. The stop signal and the deceleration signal are examples of a first signal.

The prediction processing unit 32 predicts a future position of the robot 1 on the basis of the position of the robot 1 detected by the sensor 4. The future position of the robot 1 is a position of the robot 1 after a predetermined amount of time from the current time. The prediction processing unit 32 predicts a future position of the person 10 on the basis of the position of the person 10 detected by the sensor 4. The future position of the person 10 is a position of the person 10 after a predetermined amount of time from the current time.

The trajectory planning unit 33 judges a future positional relationship between the robot 1 and the person 10 on the basis of the future position of the robot 1 and the future position of the person 10, and determines whether to modify the movement trajectory information on the basis of the judgment result. The trajectory planning unit 33 judges whether a distance (second distance) between the future position of the robot 1 and the future position of the person 10 is shorter than a second predetermined distance. In a case in which the distance between the future position of the robot 1 and the future position of the person 10 is shorter than the second predetermined distance, the trajectory planning unit 33 modifies the movement trajectory information such that the distance between the future position of the robot 1 and the future position of the person 10 is equal to or longer than the second predetermined distance. The trajectory planning unit 33 is an example of a modification unit. The second predetermined distance is a distance that can be set as desired, and may be the longest distance from the center position of the robot 1 in the movable region of the robot 1, or may be the longest distance from the center position of the robot 1 in a region larger than the movable region of the robot 1. The first predetermined distance and the second predetermined distance may be the same distance, or the first predetermined distance and the second predetermined distance may be different distances. In a case in which the distance between the future position of the robot 1 and the future position of the person 10 is equal to or longer than the second predetermined distance, the trajectory planning unit 33 does not modify the movement trajectory information.

In a case in which the robot controller 2 receives the stop signal from the safety judgment unit 31, the robot controller 2 stops the movement of the robot 1 regardless of whether the movement trajectory information is modified. Further, in a case in which the robot controller 2 receives the deceleration signal from the safety judgment unit 31, the robot controller 2 decelerates the robot 1 regardless of whether the movement trajectory information is modified. The robot controller 2 stops or decelerates the movement of the robot 1 in response to the stop signal or the deceleration signal even if the movement trajectory information is modified. In this way, the robot controller 2 gives priority to stopping or decelerating the movement of the robot 1 over controlling the movement of the robot 1 on the basis of the movement trajectory information after modification. Since the robot controller 2 stops or decelerates the movement of the robot 1 in response to the stop signal or the deceleration signal, collision or contact between the robot 1 and the person 10 can be avoided. Further, since the sensor 4 detects the position of the robot 1 and the position of the person 10 at regular or irregular intervals, it is possible to avoid collision or contact between the robot 1 and the person 10 in accordance with a temporal change in the position of the robot 1 and a temporal change in the position of the person 10.

In a case in which the robot controller 2 does not receive the stop signal or the deceleration signal from the safety judgment unit 31 and the movement trajectory information is modified, the robot controller 2 controls the movement of the robot 1 on the basis of the movement trajectory information after modification. That is, in a case in which the distance between the position of the robot 1 and the position of the person 10 is equal to or longer than the first predetermined distance and the movement trajectory information is modified, the robot controller 2 controls the movement of the robot 1 on the basis of the movement trajectory information after modification. Since the robot controller 2 controls the movement of the robot 1 on the basis of the movement trajectory information after modification, collision or contact between the robot 1 and the person 10 in the future can be avoided. Further, since the sensor 4 detects the position of the robot 1 and the position of the person 10 at regular or irregular intervals, it is possible to avoid collision or contact between the robot 1 and the person 10 in the future in accordance with a temporal change in the position of the robot 1 and a temporal change in the position of the person 10.

According to the control system including the control device 3, by stopping or decelerating the movement of the robot 1 on the basis of the positional relationship between the position of the robot 1 and the position of the person 10 and concurrently controlling the movement of the robot 1 on the basis of the movement trajectory information after modification, the operation efficiency of the robot 1 can be improved while ensuring safety. Accordingly, both safety and operation efficiency of the robot 1 can be achieved in a compatible manner. Further, compared to a case of control based on machine learning only, safety standards can be easily met. As a result, safety certification of the control device 3 and the control system is easier to achieve, and advanced control techniques can be applied in cases where the robot 1 and the person 10 coexist and collaborate.

In the configuration example illustrated in FIG. 1, the robot controller 2 and the control device 3 are separate bodies, but the robot controller 2 and the control device 3 may be integrated. The function of the control device 3 may be incorporated into the robot controller 2, or the function of the robot controller 2 may be incorporated into the control device 3.

### <System Configuration>

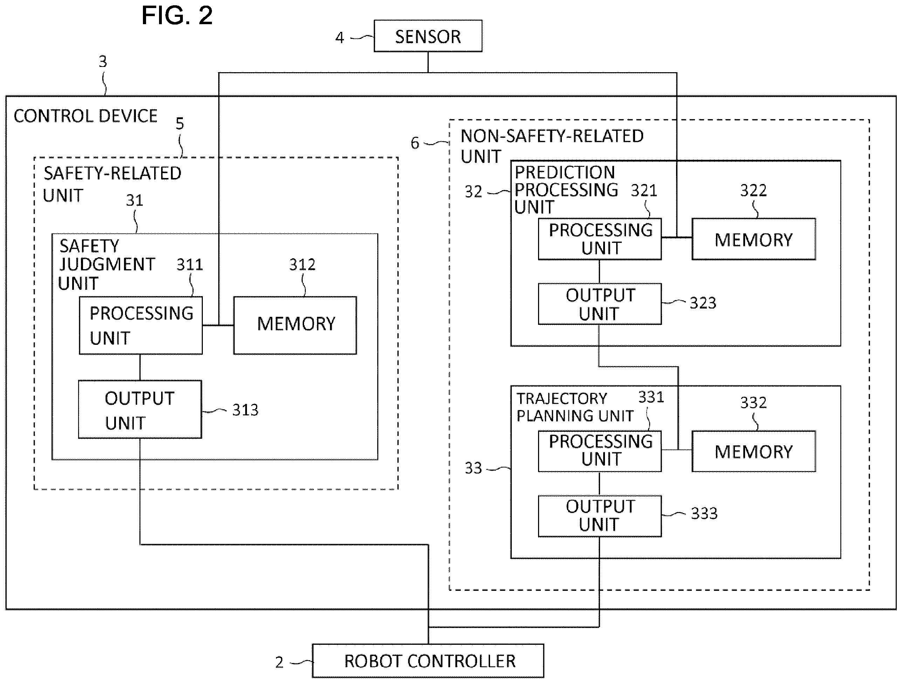

The control system will now be described with reference to FIGS. 1 and 2. Of the entire control system, a portion related to a safety system is referred to as a safety-related unit, and a portion other than the safety system is referred to as a non-safety-related unit. In the present embodiment, primarily the safety judgment unit 31 functions as a safety-related unit 5, and primarily the prediction processing unit 32 and the trajectory planning unit 33 function as a non-safety-related unit 6.

The safety judgment unit 31 includes a processing unit 311, a memory 312, and an output unit 313. The processing unit 311 reads out a program stored in the memory 312, controls each unit of the safety judgment unit 31, and performs signal processing, arithmetic processing, and the like. In addition, the processing unit 311 processes a detection result received from the sensor 4 and stores the processed data in the memory 312. The processing unit 311 may be constituted by, for example, a computer including a processor such as a central processing unit (CPU), a random access memory (RAM), and a non-volatile storage device (e.g., a read-only memory (ROM) or a flash memory). The form of the computer is not limited. All or some of the functions provided by the processing unit 311 may be configured by a circuit such as an application-specific integrated circuit (ASIC) or a field-programmable gate array (FPGA). The memory 312 stores data necessary for the processing unit 311 to perform processing. The memory 312 may be a RAM or a non-volatile storage device. The output unit 313 outputs a signal generated by the processing unit 311 to the robot controller 2.

The safety judgment unit 31 judges the positional relationship between the robot 1 and the person 10 on the basis of the position of the robot 1 and the position of the person 10. The safety judgment unit 31 judges the positional relationship between the robot 1 and the person 10 each time a detection result is received from the sensor 4. That is, the safety judgment unit 31 judges whether the distance between the position of the robot 1 and the position of the person 10 is shorter than the first predetermined distance each time the position of the robot 1 and the position of the person 10 are detected. Accordingly, the safety judgment unit 31 judges whether the distance between the position of the robot 1 and the position of the person 10 is shorter than the first predetermined distance over time. The safety judgment unit 31 generates the stop signal or the deceleration signal on the basis of the judgment result, and transmits the stop signal or the deceleration signal to the robot controller 2.

The prediction processing unit 32 includes a processing unit 321, a memory 322, and an output unit 323. The processing unit 321 reads out a program stored in the memory 322, controls each unit of the prediction processing unit 32, and performs signal processing, arithmetic processing, and the like. In addition, the processing unit 321 processes a detection result received from the sensor 4 and stores the processed data in the memory 322. The processing unit 321 may be constituted by, for example, a computer including a processor such as a CPU, a RAM, and a non-volatile storage device. The form of the computer is not limited. All or some of the functions provided by the processing unit 321 may be configured by a circuit such as an ASIC or an FPGA. The memory 322 stores data necessary for the processing unit 321 to perform processing. The memory 322 may be a RAM or a non-volatile storage device. The output unit 323 outputs a signal generated by the processing unit 321 to the trajectory planning unit 33.

The prediction processing unit 32 predicts a future position of the robot 1 on the basis of the position of the robot 1 and predicts a future position of the person 10 on the basis of the position of the person 10. The prediction processing unit 32 predicts the future position of the robot 1 and the future position of the person 10 each time the position of the robot 1 and the position of the person 10 are detected. Accordingly, the prediction processing unit 32 predicts the future position of the robot 1 and the future position of the person 10 over time. The prediction processing unit 32 may predict the future position of the robot 1 and the future position of the person 10 by machine learning using artificial intelligence (Al). The prediction processing unit 32 may store the position of the robot 1 in the memory 322 or another storage device each time the position of the robot 1 is detected, and further predict the future position of the robot 1 on the basis of a plurality of positions of the robot 1. The prediction processing unit 32 may predict the future position of the robot 1 on the basis of the position of the robot 1 and the movement trajectory information. The prediction processing unit 32 may predict the future position of the robot 1 on the basis of a plurality of positions of the robot 1 and the movement trajectory information. Thus, prediction accuracy of the future position of the robot 1 is improved. The prediction processing unit 32 may store the position of the person 10 in the memory 322 or another storage device each time the position of the person 10 is detected, and further predict the future position of the person 10 on the basis of a plurality of positions of the person 10. Thus, prediction accuracy of the future position of the person 10 is improved. The prediction processing unit 32 generates a signal including the future position of the robot 1 and the future position of the person 10 and transmits the signal to the trajectory planning unit 33.

The trajectory planning unit 33 includes a processing unit 331, a memory 332, and an output unit 333. The processing unit 331 reads out a program stored in the memory 332, controls each unit of the trajectory planning unit 33, and performs signal processing, arithmetic processing, and the like. In addition, the processing unit 331 processes a signal received from the prediction processing unit 32 and stores the processed data in the memory 332. The processing unit 331 may be constituted by, for example, a computer including a processor such as a CPU, a RAM, and a non-volatile storage device. The form of the computer is not limited. All or some of the functions provided by the processing unit 331 may be configured by a circuit such as an ASIC or an FPGA. The memory 332 stores data necessary for the processing unit 331 to perform processing. The memory 332 may be a RAM or a non-volatile storage device. The output unit 333 outputs a signal generated by the processing unit 331 and predetermined information to the robot controller 2.

The trajectory planning unit 33 judges a future positional relationship between the robot 1 and the person 10 on the basis of the future position of the robot 1 and the future position of the person 10, and determines whether to modify the movement trajectory information on the basis of the judgment result. In a case in which the movement trajectory information is modified, the trajectory planning unit 33 transmits the movement trajectory information after modification to the robot controller 2. The robot controller 2 receives the movement trajectory information after modification and stores the movement trajectory information after modification in the storage unit of the robot controller 2.

Although an example in which the movement trajectory information and the movement trajectory information after modification are stored in the storage unit of the robot controller 2 has been described above, no such limitation is intended. The movement trajectory information and the movement trajectory information after modification may be stored in an external storage device connected to the robot controller 2. The robot controller 2 may acquire the movement trajectory information from the external storage device. In a case in which the movement trajectory information is modified, the trajectory planning unit 33 may store the movement trajectory information after modification in the external storage device and transmit, to the robot controller 2, a signal indicating that the movement trajectory information is modified. In a case in which the robot controller 2 receives the signal indicating that the movement trajectory information is modified, the robot controller 2 may acquire the movement trajectory information after modification from the external storage device.

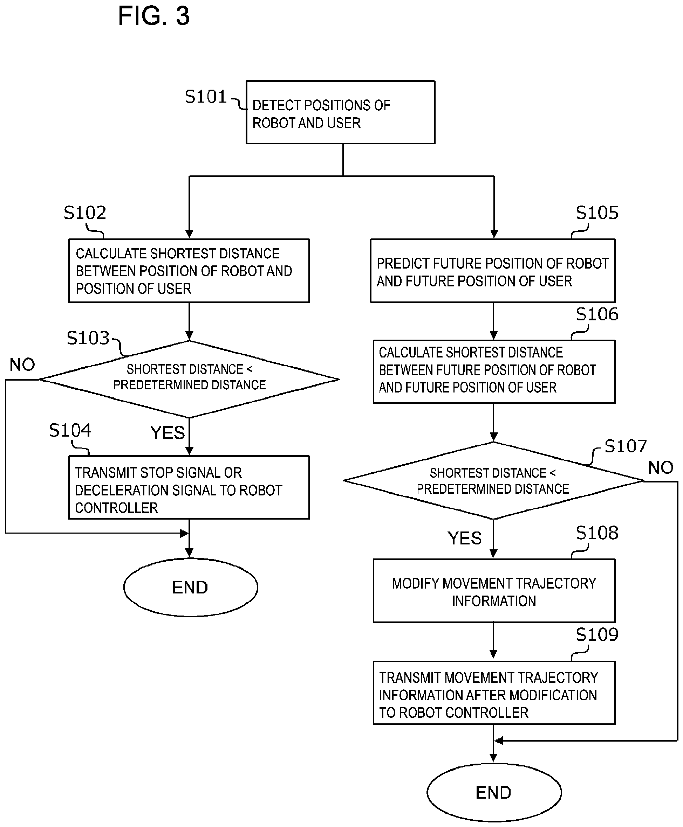

A processing flow of the control system will now be described with reference to the flowchart of FIG. 3. In the flowchart of FIG. 3, the safety-related unit 5 (safety judgment unit 31) performs the processing of steps S102 to S104, and the non-safety-related unit 6 (prediction processing unit 32 and trajectory planning unit 33) performs the processing of steps S105 to S109.

The sensor 4 detects the position of the robot 1 and the position of the person 10, and transmits the detection result to the safety judgment unit 31 and the prediction processing unit 32 (step S101). Upon receipt of the detection result from the sensor 4, the safety judgment unit 31 calculates the shortest distance between the position of the robot 1 and the position of the person 10 (step S102). The safety judgment unit 31 calculates the distance between the position of a part of the robot 1 and the position of a body part of the person 10, and determines the shortest distance among the plurality of calculated distances to be the shortest distance between the position of the robot 1 and the position of the person 10. The safety-related unit 5 (safety judgment unit 31) judges whether the shortest distance between the position of the robot 1 and the position of the person 10 is shorter than the first predetermined distance (step S103).

In a case in which the shortest distance between the position of the robot 1 and the position of the person 10 is shorter than the first predetermined distance (step S103: YES), the safety judgment unit 31 transmits a stop signal or a deceleration signal to the robot controller 2 (step S104). In a case in which the robot controller 2 receives the stop signal, the robot controller 2 stops the movement of the robot 1. In a case in which the robot controller 2 receives the deceleration signal, the robot controller 2 decelerates the movement of the robot 1. In a case in which the shortest distance between the position of the robot 1 and the position of the person 10 is equal to or longer than the first predetermined distance (step S103: NO), the safety judgment unit 31 does not transmit the stop signal or the deceleration signal to the robot controller 2. The processing of steps S102 to S104 is performed each time the safety judgment unit 31 receives a detection result from the sensor 4.

The prediction processing unit 32, upon receipt of the detection result from the sensor 4, predicts the future position of the robot 1 and the future position of the person 10 (step S105). The prediction processing unit 32 calculates the shortest distance between the future position of the robot 1 and the future position of the person 10 (step S106). In other words, the prediction processing unit 32 calculates the shortest distance between the position of the robot 1 and the position of the person 10 in the future. The prediction processing unit 32 calculates the distance between the future position of a part of the robot 1 and the future position of a body part of the person 10, and determines the shortest distance among the plurality of calculated distances to be the shortest distance between the future position of the robot 1 and the future position of the person 10. The trajectory planning unit 33 judges whether the shortest distance between the future position of the robot 1 and the future position of the person 10 is shorter than the second predetermined distance (step S107).

In a case in which the shortest distance between the future position of the robot 1 and the future position of the person 10 is shorter than the second predetermined distance (step S107: YES), the trajectory planning unit 33 modifies the movement trajectory information such that the distance between the future position of the robot 1 and the future position of the person 10 is equal to or longer than the second predetermined distance (step S108). The trajectory planning unit 33 transmits the movement trajectory information after modification to the robot controller 2 (step S109). In a case in which the stop signal or the deceleration signal is not received and the movement trajectory information is modified, the robot controller 2 controls the movement of the robot 1 on the basis of the movement trajectory information after modification. In a case in which the shortest distance between the future position of the robot 1 and the future position of the person 10 is equal to or longer than the second predetermined distance (step S107: NO), the trajectory planning unit 33 does not modify the movement trajectory information. The processing of steps S105 to S109 is performed each time the prediction processing unit 32 receives a detection result from the sensor 4.

In a case in which the robot controller 2 receives the stop signal, the robot controller 2 stops the movement of the robot 1 regardless of whether the movement trajectory information is modified. In a case in which the robot controller 2 receives the deceleration signal, the robot controller 2 decelerates the movement of the robot 1 regardless of whether the movement trajectory information is modified. In this way, the robot controller 2 gives priority to stopping or decelerating the movement of the robot 1 over controlling the movement of the robot 1 on the basis of the movement trajectory information after modification. That is, in the control system, the priority of the safety-related unit 5 is set higher than the priority of the non-safety-related unit 6, and the processing by the safety-related unit 5 having the higher priority and the processing by the non-safety-related unit 6 are performed in parallel. A first method and a second method for setting the priority of the safety-related unit 5 higher than the priority of the non-safety-related unit 6 will now be described.

### (First Method)

The first method is a process in which, in a case in which the movement of the robot 1 is stopped or decelerated, the robot controller 2 ignores modification of the movement trajectory information by the trajectory planning unit 33 until the shortest distance between the position of the robot 1 and the position of the person 10 is equal to or longer than the first predetermined distance. In a case in which the shortest distance between the position of the robot 1 and the position of the person 10 is equal to or longer than the first predetermined distance (step S103: NO), the safety judgment unit 31 transmits a first safety signal to the robot controller 2. The first safety signal is an example of a first signal. In a case in which, after stopping the movement of the robot 1 due to receiving the stop signal, the robot controller 2 receives the first safety signal and the movement trajectory information is modified after the robot controller 2 receives the first safety signal, the robot controller 2 resumes the movement of the robot 1. Then, the robot controller 2 controls the movement of the robot 1 on the basis of the movement trajectory information modified after receipt of the first safety signal. In a case in which, after decelerating the movement of the robot 1 due to receiving the deceleration signal, the robot controller 2 receives the first safety signal and the movement trajectory information is modified after the robot controller 2 receives the first safety signal, the robot controller 2 returns the movement speed of the robot 1 to the speed before deceleration. Then, the robot controller 2 controls the movement of the robot 1 on the basis of the movement trajectory information modified after receipt of the first safety signal.

Even if the movement trajectory information is modified, the robot controller 2 does not control the movement of the robot 1 on the basis of the movement trajectory information after modification after stopping the movement of the robot 1 and before receiving the first safety signal. Even if the movement trajectory information is modified, the robot controller 2 does not control the movement of the robot 1 on the basis of the movement trajectory information after modification after decelerating the movement of the robot 1 and before receiving the first safety signal. With the priority of the safety-related unit 5 set higher than the priority of the non-safety-related unit 6, the safety of the control system can be improved.

### (Second Method)

The second method is a process in which, in a case in which the movement of the robot 1 is stopped or decelerated, the trajectory planning unit 33 suspends modification of the movement trajectory information until the shortest distance between the position of the robot 1 and the position of the person 10 is equal to or longer than the first predetermined distance. In a case in which the shortest distance (first distance) between the position of the robot 1 and the position of the person 10 is shorter than the first predetermined distance (step S103: YES), the safety judgment unit 31 transmits a hazard signal to the trajectory planning unit 33. The hazard signal is an example of a second signal. The safety judgment unit 31 judges whether a distance (third distance) between the position of the robot 1 and the position of the person 10 detected by the sensor 4 after transmitting the hazard signal to the trajectory planning unit 33 is shorter than the first predetermined distance (step S103). In a case in which the distance (third distance) between the position of the robot 1 and the position of the person 10 is equal to or longer than the first predetermined distance, the safety judgment unit 31 transmits a modification signal to the trajectory planning unit 33. The modification signal is an example of a third signal. The trajectory planning unit 33 does not modify the movement trajectory information in a period from after receiving the hazard signal and until receiving the modification signal. Accordingly, after the trajectory planning unit 33 receives the hazard signal and before the trajectory planning unit 33 receives the modification signal, even if the shortest distance between the future position of the robot 1 and the future position of the person 10 is shorter than the second predetermined distance, the trajectory planning unit 33 does not modify the movement trajectory information. With the priority of the safety-related unit 5 set higher than the priority of the non-safety-related unit 6, the safety of the control system can be improved.

The sensor 4 detects the position of the robot 1 and the position of the person 10 at regular or irregular intervals. A case in which the safety judgment unit 31 receives the detection result from the sensor 4 after transmitting the stop signal or the deceleration signal to the robot controller 2 will now be described. Upon receipt of the detection result from the sensor 4 after transmission of the stop signal or the deceleration signal to the robot controller 2, the safety judgment unit 31 calculates the shortest distance between the position of the robot 1 and the position of the person 10 (step S102). The safety judgment unit 31 judges whether the shortest distance between the position of the robot 1 and the position of the person 10 detected by the sensor 4 after transmitting the stop signal or the deceleration signal to the robot controller 2 is shorter than the first predetermined distance (step S103).

In a case in which the shortest distance between the position of the robot 1 and the position of the person 10 detected by the sensor 4 after transmitting the stop signal or the deceleration signal to the robot controller 2 is equal to or longer than the first predetermined distance, the safety judgment unit 31 transmits the second safety signal to the robot controller 2. The second safety signal is an example of a fourth signal. In a case in which, after stopping the movement of the robot 1 due to receiving the stop signal, the robot controller 2 receives the second safety signal and the movement trajectory information is not modified, the robot controller 2 resumes the movement of the robot 1 and controls the robot 1 on the basis of the movement trajectory information. Since the movement of the robot 1 is resumed after collision or contact between the robot 1 and the person 10 is successfully avoided by stopping the movement of the robot 1, the operation efficiency of the robot 1 can be improved while ensuring the safety of the control system.

In a case in which, after decelerating the movement of the robot 1 due to receiving the deceleration signal, the robot controller 2 receives the second safety signal and the movement trajectory information is not modified, the robot controller 2 returns the movement speed of the robot 1 to the speed before deceleration and controls the robot 1 on the basis of the movement trajectory information. Since the movement speed of the robot 1 is returned to the speed before deceleration after collision or contact between the robot 1 and the person 10 is successfully avoided by decelerating the movement of the robot 1, the operation efficiency of the robot 1 can be improved while ensuring the safety of the control system.

Although the flowchart of FIG. 3 illustrates an example in which the safety-related unit 5 makes a judgment by using the shortest distance between the position of the robot 1 and the position of the person 10, no such limitation is intended. For example, the safety-related unit 5 may make the judgment by using the longest distance between the position of the robot 1 and the position of the person 10. Further, although the flowchart of FIG. 3 illustrates an example in which the non-safety-related unit 6 makes a judgment by using the shortest distance between the future position of the robot 1 and the future position of the person 10, no such limitation is intended. For example, the non-safety-related unit 6 may make a judgment by using the longest distance between the future position of the robot 1 and the future position of the person 10.

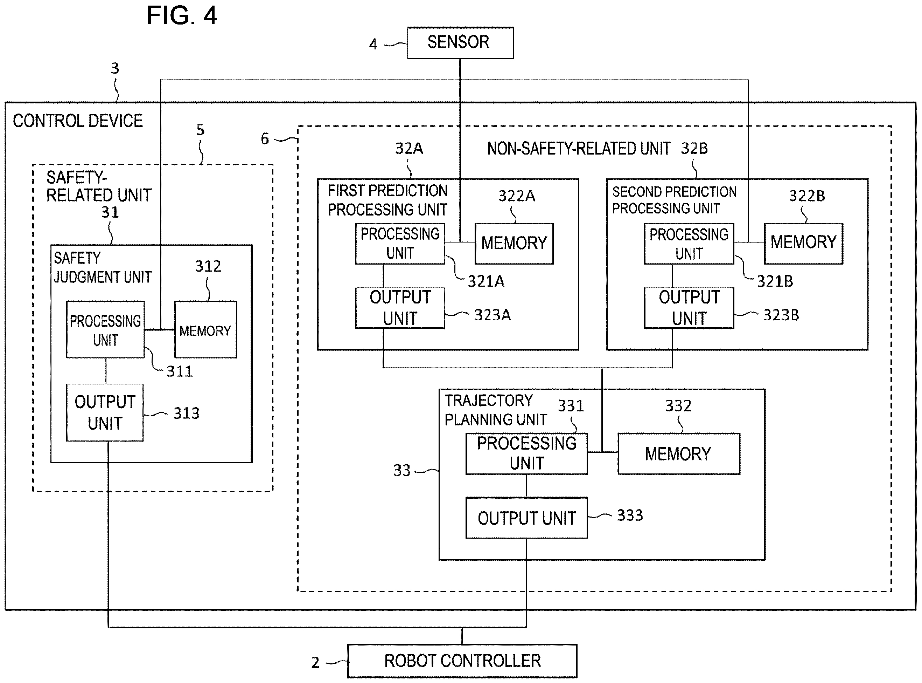

In the above description, the prediction processing unit 32 is configured to predict the future position of the robot 1 and predict the future position of the person 10, but no such limitation is intended. As illustrated in FIG. 4, a first prediction processing unit 32A may predict the future position of the robot 1, and a second prediction processing unit 32B may predict the future position of the person 10. The prediction processing unit 32A includes a processing unit 321A, a memory 322A, and an output unit 323A. The configuration and the like of the processing unit 321A, the memory 322A, and the output unit 323A are similar to those of the processing unit 321, the memory 322, and the output unit 323, respectively. The prediction processing unit 32B includes a processing unit 321B, a memory 322B, and an output unit 323B. The configuration and the like of the processing unit 321B, the memory 322B, and the output unit 323B are similar to those of the processing unit 321, the memory 322, and the output unit 323, respectively.

The sensor 4 detects the position of the robot 1 and the position of the person 10 and transmits the detection result to the safety judgment unit 31, the first prediction processing unit 32A, and the second prediction processing unit 32B. Upon receipt of the detection result from the sensor 4, the first prediction processing unit 32A predicts the future position of the robot 1. Upon receipt of the detection result from the sensor 4, the second prediction processing unit 32B predicts the future position of the person 10. Other configurations are similar to those of the prediction processing unit 32.

Each process described above may be regarded as a method executed by a computer. Further, a program for causing a computer to execute each process described above may be provided to the computer via a network or from a computer-readable recording medium or the like that holds data in a non-transitory manner. The computer can be made to function as the robot controller 2 or the control device 3 by reading and executing the program described above. The computer may also be made to function as both the robot controller 2 and the control device 3 by reading and executing the program described above.

### <Supplementary Note>

A control device (3) including:
a control unit (2) configured to control a movement of a robot (1) on the basis of movement trajectory information indicating a movement trajectory of the robot (1);
a judgment unit (31) configured to judge whether a first distance between a position of the robot and a position of a person is shorter than a first predetermined distance, the positions being detected by a detection unit (4);
a prediction unit (32) configured to predict a future position of the robot (1) on the basis of the position of the robot (1) and predict a future position of the person on the basis of the position of the person; and
a modification unit (33) configured to judge whether a second distance between the future position of the robot (1) and the future position of the person is shorter than a second predetermined distance and, in a case in which the second distance is shorter than the second predetermined distance, modify the movement trajectory information such that the second distance is equal to or longer than the second predetermined distance,
wherein the control unit (2)
in a case in which the first distance is shorter than the first predetermined distance, stops or decelerates the movement of the robot (1), regardless of whether the movement trajectory information is modified, or
in a case in which the first distance is equal to or longer than the first predetermined distance and the movement trajectory information is modified, controls the movement of the robot (1) on the basis of the movement trajectory information after modification.

### REFERENCE SIGNS LIST

1: Robot
2: Robot controller
3: Control device
4: Sensor
5: Safety-related unit
6: Non-safety-related unit
10: Person
31: Safety judgment unit
32: Prediction processing unit
32A: First prediction processing unit
32B: Second prediction processing unit
33: Trajectory planning unit

## Claims

1. A control device comprising:
a control unit configured to control a movement of a robot on the basis of movement trajectory information indicating a movement trajectory of the robot;
a judgment unit configured to judge whether a first distance between a position of the robot and a position of a person is shorter than a first predetermined distance, the positions being detected by a detection unit;
a prediction unit configured to predict a future position of the robot on the basis of the position of the robot and predict a future position of the person on the basis of the position of the person; and
a modification unit configured to judge whether a second distance between the future position of the robot and the future position of the person is shorter than a second predetermined distance and, in a case in which the second distance is shorter than the second predetermined distance, modify the movement trajectory information such that the second distance is equal to or longer than the second predetermined distance,
wherein the control unit
in a case in which the first distance is shorter than the first predetermined distance, stops or decelerates the movement of the robot, regardless of whether the movement trajectory information is modified, or
in a case in which the first distance is equal to or longer than the first predetermined distance and the movement trajectory information is modified, controls the movement of the robot on the basis of the movement trajectory information after modification.

2. The control device according to claim 1,
wherein the detection unit detects the position of the robot and the position of the person at regular or irregular intervals,
the judgment unit judges whether the first distance is shorter than the first predetermined distance each time the position of the robot and the position of the person are detected, and
the prediction unit predicts the future position of the robot and the future position of the person each time the position of the robot and the position of the person are detected.

3. The control device according to claim 2,
wherein the judgment unit, in a case in which the first distance is equal to or longer than the first predetermined distance, transmits a first signal to the control unit, and
in a case in which the control unit receives the first signal after stopping the movement of the robot and the movement trajectory information is modified after the control unit receives the first signal, the control unit resumes the movement of the robot and controls the movement of the robot on the basis of the movement trajectory information modified after receipt of the first signal, or
in a case in which the control unit receives the first signal after decelerating the movement of the robot and the movement trajectory information is modified after the control unit receives the first signal, the control unit returns a movement speed of the robot to a speed before the deceleration and controls the movement of the robot on the basis of the movement trajectory information modified after receipt of the first signal.

4. The control device according to claim 2,
wherein the judgment unit
in a case in which the first distance is shorter than the first predetermined distance, transmits a second signal to the modification unit and judges whether a third distance between the position of the robot and the position of the person detected after transmitting the second signal to the modification unit is shorter than the first predetermined distance, and,
in a case in which the third distance is equal to or longer than the first predetermined distance, transmits a third signal to the modification unit, and
the modification unit does not modify the movement trajectory information in a period from after receiving the second signal and until receiving the third signal.

5. The control device according to claim 2,
wherein the judgment unit, in a case in which the first distance is equal to or longer than the first predetermined distance, transmits a fourth signal to the control unit, and
in a case in which the control unit receives the fourth signal after stopping the movement of the robot and the movement trajectory information is not modified, the control unit resumes the movement of the robot and controls the movement of the robot on the basis of the movement trajectory information, or
in a case in which the control unit receives the fourth signal after decreasing a movement speed of the robot and the movement trajectory information is not modified, the control unit returns the movement speed of the robot to an original speed and controls the movement of the robot on the basis of the movement trajectory information.

6. The control device according to any one of claims 1 to 5,
wherein the prediction unit predicts the future position of the robot on the basis of a plurality of positions of the robot.

7. The control device according to any one of claims 1 to 5,
wherein the prediction unit predicts the future position of the robot on the basis of the position of the robot and the movement trajectory information.

8. The control device according to any one of claims 1 to 5,
wherein the prediction unit predicts the future position of the robot on the basis of a plurality of positions of the robot and the movement trajectory information.

9. The control device according to any one of claims 1 to 8,
wherein the prediction unit predicts the future position of the person on the basis of a plurality of positions of the person.

10. The control device according to any one of claims 1 to 9,
wherein the prediction unit predicts the future position of the robot and the future position of the person by machine learning.

11. A control device comprising:
a control unit configured to control a movement of a robot on the basis of movement trajectory information indicating a movement trajectory of the robot;
a judgment unit configured to judge whether a first distance between a position of the robot and a position of a person is shorter than a first predetermined distance, the positions being detected by a detection unit;
a first prediction unit configured to predict a future position of the robot on the basis of the position of the robot;
a second prediction unit configured to predict a future position of the person on the basis of the position of the person; and
a modification unit configured to judge whether a second distance between the future position of the robot and the future position of the person is shorter than a second predetermined distance and, in a case in which the second distance is shorter than the second predetermined distance, modify the movement trajectory information such that the second distance is equal to or longer than the second predetermined distance,
wherein the control unit
in a case in which the first distance is shorter than the first predetermined distance, stops or decelerates the movement of the robot, regardless of whether the movement trajectory information is modified, or
in a case in which the first distance is equal to or longer than the first predetermined distance and the movement trajectory information is modified, controls the movement of the robot on the basis of the movement trajectory information after modification.

12. A control system comprising:
the control device according to any one of claims 1 to 11;
the robot; and
the detection unit.

13. A control method executed by a computer, the control method comprising:
a control step of controlling a movement of a robot on the basis of movement trajectory information indicating a movement trajectory of the robot;
a judgment step of judging whether a first distance between a position of the robot and a position of a person is shorter than a first predetermined distance, the positions being detected by a detection unit;
a prediction step of predicting a future position of the robot on the basis of the position of the robot and predicting a future position of the person on the basis of the position of the person; and
a modification step of judging whether a second distance between the future position of the robot and the future position of the person is shorter than a second predetermined distance and, in a case in which the second distance is shorter than the second predetermined distance, modifying the movement trajectory information such that the second distance is equal to or longer than the second predetermined distance,
wherein, in the control step,
in a case in which the first distance is shorter than the first predetermined distance, the movement of the robot is stopped or decelerated, regardless of whether the movement trajectory information is modified, or
in a case in which the first distance is equal to or longer than the first predetermined distance and the movement trajectory information is modified, the movement of the robot is controlled on the basis of the movement trajectory information after modification.

14. A program for causing a computer to execute each step according to claim 13.
